Europäisches Patentamt

European Patent Office

Office européen des brevets

(11) Veröffentlichungsnummer: **0 472 771 A1**

# (12) EUROPÄISCHE PATENTANMELDUNG

(21) Anmeldenummer: **90116740.3**

(22) Anmeldetag: **31.08.90**

(51) Int. Cl.5: **C05G 1/00, E04H 5/02**

(43) Veröffentlichungstag der Anmeldung:
**04.03.92 Patentblatt 92/10**

(84) Benannte Vertragsstaaten:
**AT BE CH DE DK ES FR GB GR IT LI LU NL SE**

(71) Anmelder: **KOPF-BAU GmbH**
**Bahnhofstrasse 20**
**W-8453 Vilseck(DE)**

(72) Erfinder: **Kopf, Helga**
**Bahnhofstrasse 20**
**W-8453 Vilseck(DE)**

(74) Vertreter: **Göbel, Matthias, Dipl.-Ing.**
**Pruppacher Hauptstrasse 5-7**
**W-8501 Pyrbaum-Pruppach(DE)**

(54) **Verfahren zum Herstellen von Humusdüngemitteln und Bodenverbesserungsmitteln.**

(57) Bei einem Verfahren zum Herstellen von Humusdüngemitteln und Bodenverbesserungsmitteln unter Verwendung von verrottbaren Materialien (10) und Mineralstoffen (6,7) ist zum schnellen und mobilen Herstellen der Dünge- bzw. Bodenverbesserungsmittel vorgesehen, daß die verrottbaren Materialien gehäckselt und die Mineralstoffe vermahlen an eine gemeinsame Dosiereinrichtung (8) gegeben und zur Bildung eines homogenisierten Mischguts von dieser dosiert einem Mischer (9) zugeführt werden und daß das Mischgut an einem mit einer Absack- und Wiegeeinrichtung versehenen Sammelbehälter (Silo) (12) weitergeleitet wird.

Die Vermahlung der Mineralstoffe erfolgt in einer Mühle (4), die gemeinsam mit einem Sammelbehälter (6) in einem mobilen prismatischen Behälter (1) fest eingestellt ist. Die Dosiereinrichtung (8), der Mischer (9) und der Sammelbehälter (12) für das Mischgut mit Absack- und Wiegeeinrichtung (14) sind in einem weiteren mobilen prismatischen Behälter (2) angeordnet.

Fig.2

Die Erfindung betrifft ein Verfahren zum Herstellen von Humusdüngemitteln und Bodenverbesserungsmitteln unter Verwendung von verrottbaren Materialien und Mineralstoffen sowie eine Vorrichtung zur Durchführung des Verfahrens.

Es ist bereits bekannt, verrottbare Materialien allein oder in Verbindung mit Zusätzen, wie Gesteinsmehl, Knochenmehl oder Nährstoffen zu Kompost umzusetzen. Die Kompostierung erfolgt in der Regel in Haufen oder Mieten bzw. in ortsfesten Behältnissen. Abgesehen davon, daß die so erzielten Umsetzungen zeitraubend sind, sind auch nur kleine Mengen verarbeitbar. Schließlich wirkt sich auch die Ortsgebundenheit der Behältnisse bei der Kompostierung hindernd aus.

Es ist Aufgabe der Erfindung Maßnahmen zum schnellen Herstellen größerer Mengen Düngemittel bzw. Bodenverbesserungmitteln an beliebigen Orten zu schaffen.

Der Erfindung gemäß ist diese Aufgabe dadurch gelöst, daß die verrottbaren Materialien gehäckselt und die Mineralstoffe, z.B. Kalkstein oder auch Knochen vermahlen an eine gemeinsame Dosiereinrichtung gegeben und zur Bildung eines homogenisierten Mischguts von dieser dosiert einem Mischer zugeführt werden und daß das Mischgut an einem mit einer Absack- und Wiegeeinrichtung versehenen Sammelbehälter weitergeleitet wird. Durch die Verfahrensschritte ist erreicht, daß beliebige Mengen verrottbares Material, wie pflanzliche Abfälle mit beliebigen Mengen Zusätzen, wie Mineralstoffen nach deren Vermahlung vermittels des Mischers ein fein verteiltes Mischgut ergeben und daß dieses Mischgut über die Absack- und Wiegeeinrichtung in transportablen Behältnissen, z.B. Säcken bereitstellbar ist.

Zur Vornahme der Verfahrensschritte ist vorgesehen, daß die Vermahlung der Mineralstoffe in einer Mühle erfolgt, die gemeinsam mit einem Sammelbehälter in einem mobilen prismatischen Behälter fest eingestellt ist, daß die Dosiereinrichtung, der Mischer und der Sammelbehälter für das Mischgut mit Absack- und Wiegeeinrichtung in einem weiteren mobilen prismatischen Behälter angeordnet sind und daß die beiden Behälter, neben- oder übereinander stellbar sind und Fördereinrichtungen für die Mineralstoffe, den gehäckselten Materialien und das Mischgut aufweisen. Gemäß bevorzugter Ausführung sind die Behälter mit gleichen Querschnittsformen und Querschnittsgrößen ausgebildet. Zweckmäßig finden als Behälter an sich bekannte Frachtcontainer Anwendung, die die Voraussetzung für eine besonders einfache und leichte Mobilität aufweisen. Die Frachtcontainer sind mitsamt der Vorrichtung auf Fahrgestellen von Automobilen auswechselbar aufstellbar und transportierbar und vermittels Hebezeugen zum Aufstellen der Vorrichtung anhebbar. Es versteht sich, daß die Mühle durch eine an sich bekannte Mahleinrichtung, z.B. eine Hammerschlagmühle gebildet sein kann, während als Sammelbehälter für das Mahlgut bzw. Mischgut Silos dienen.

In weiterer Ausgestaltung der Vorrichtung ist vorgesehen, daß der den Mischer aufnehmende Behälter als Träger eines aufstellbaren unabhängigen weiteren mobilen prismatischen Behälters dient und daß in dem aufgestellten Behälter der Sammelbehälter über Öffnungen in den Trennungsflächen beider Behälter mit einer Teilhöhe frei einragt. Der aufgestellte Behälter gibt so die Möglichkeit zur Anwendung eines hohen Sammelbehälters und diesen gegen Witterungseinflüssen zu schützen. Vorteilhaft ist ferner, wenn der aufstellbare Behälter sowohl den Sammelbehälter mit einer Teilhöhe als auch eine Büro- und/oder Laboreinrichtung und/oder sanitäre Einrichtungen aufnimmt.

Ferner ist vorgesehen, die dem Sammelbehälter für das Mischgut zugeordneten Absack- und Wiegeeinrichtung eine Einrichtung zum Verschließen der mit Mischgut gefüllten Behältnisse, z.B. Säcke zuzustellen.

Schließlich kann noch die Anordnung einer Einrichtung zum Trocknen des vom Sammelbehälters abgegebenen Mischgutes vorgesehen sein, die in weiterer Ausgestaltung der Vorrichtung in einem, z.B. an dem die Absack- und Wiegeeinrichtung aufweisenden weiteren mobilen Behälter mit gleicher Querschnittsform und Querschnittgröße untergebracht ist. In Fortbildung dieses Gedankens kann der Behälter neben der Einrichtung zum Trocknen des Mischgutes auch eine Einrichtung zum Granulieren des vom Sammelbehälter abgegebenen Mischgutes aufweisen. Die so gestaltete Vorrichtung erlaubt die Herstellung von Düngemitteln od.dgl., die durch die Trocknung und Granulierung leicht zu handhaben und zu dosieren sind und außerdem die Möglichkeit zu einer längeren verlustfreien Aufbewahrung geben.

Es versteht sich, daß die mobile Vorrichtung bei Ortswechsel jeweils an ein örtliches Stromnetz anschließbar ist. Um den Betrieb der Vorrichtung auch in unzugänglichen Gebieten und unterentwickelten Ländern zu ermöglichen ist vorgesehen, den Behältern einen elektrischen Stromerzeuger mit einem durch flüssigen oder gasförmigen Brennstoff betreibbaren Antriebsmotor zuzuordnen. Hierbei kann der Generator und der Antriebsmotor frei aufstellbar oder zweckmäßig in einem an den Behältern anstellbaren weiteren Behälter mit zu diesen gleicher Querschnittsform und Querschnittsgröße angeordnet sein.

Insgesamt gesehen ist das Wesentliche der Vorrichtung die Kombination einer Anzahl mobiler Behältern, die die einzelnen Arbeitskomponenten, die z.B. der Vermahlung, dem Sammeln und Mischen bzw. Absacken und Wiegen dienen aufnehmen, wobei die Ausgestaltung der Arbeitskomponenten beliebig sein kann.

Die Erfindung ist anhand eines Ausführungsbeispiels in der Zeichnung verdeutlicht. Es zeigen:

Fig. 1 eine Vorrichtung in Seitenansicht mit offenen Behältern,

Fig. 2 eine Vorrichtung in Draufsicht mit offenen Behältern,

Fig. 3 eine Vorrichtung in Vorderansicht mit offenen Behältern und

Fig. 4 ein Teilstück einer Vorrichtung in Seitenansicht, gemäß einer abgewandelten Ausführung.

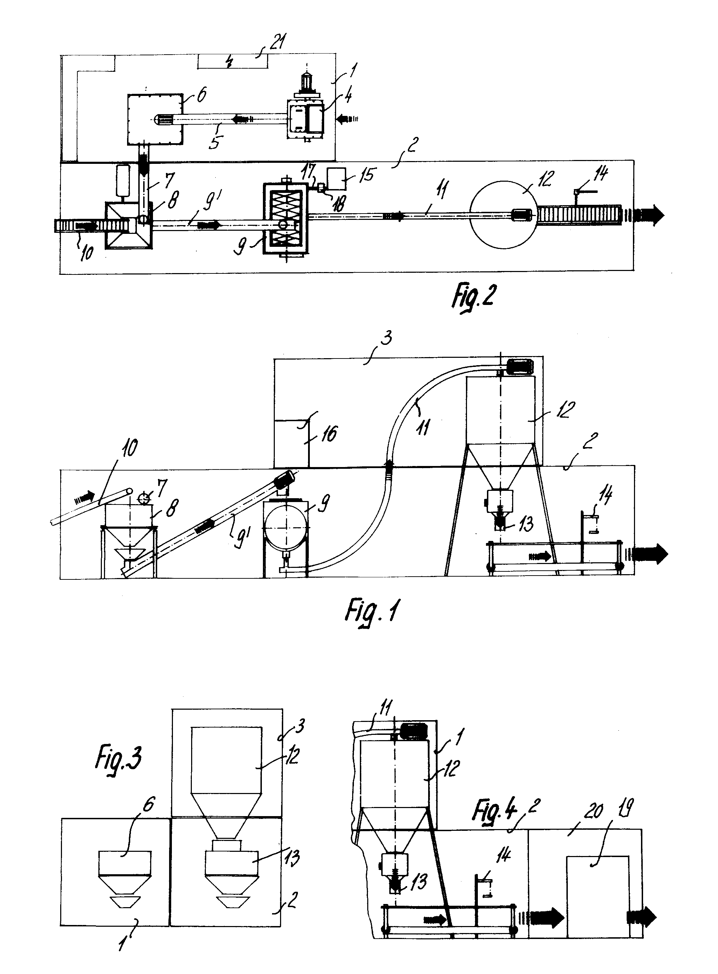

In den Fig. sind mit 1, 2 und 3 Behälter bezeichnet, die z.B. durch an sich bekannte Frachtcontainer gebildet sind. Die Behälter 1, 2 und 3 weisen beliebige Längen auf und sind aneinander anstellbar (Fig. 2) bzw. aufeinander stellbar (Fig. 1). Der Behälter 1 dient der Aufnahme einer Mühle 4, z.B. einer Hammerschlagmühle, die zum Vermahlen von Mineralstoffen, Knochen usw. geeignet ist und ihr Mahlgut über ein Förderrohr 5 mit Förderschnecke an einen Sammelbehälter 6 abgibt. Der Sammelbehälter 6 ist durch ein an sich bekanntes Silo gebildet, das beim Ausführungsbeispiel nach unten entleerbar ist. Das Mahlgut des Sammelbehälters 6 ist über ein weiteres Förderrohr 7 an eine Dosiereinrichtung 8 abgebbar, die im Behälter 2 aufgestellt und über ein Förderrohr 9' mit Förderschnecke mit einem Mischer 9 in Verbindung steht. Der Dosiereinrichtung 8 ist fernerhin, z.B. über ein Transportband 10 gehäckseltes verrottbares Material zuführbar, das von der Dosiereinrichtung 8 gemeinsam mit Mahlgut über das Föderrohr 9' in den Mischer gelangt. Der Mischer 9 dient der Erzeugung eines homogenen Mischgutes, das über eine weitere Förderschnecke 11 in einen Sammelbehälter 12 abgebbar ist. Der Sammelbehälter 12 ist als Hochsilo ausgeführt und mit einer Absackeinrichtung 13 sowie einer zugeordneten Wiegeeinrichtung 14 versehen. Je nach Beschaffenheit der zur Verfügung gestellten Materialien oder Mahlgut kann der Mischer 9 mit oder ohne Flüssigkeit arbeiten. Der Zuführung von Flüssigkeit dient ein dem Mischer 9 zugeordneter Wassertank 15, der hierzu durch eine Rohrleitung 17 mit Absperreinrichtung 18 mit dem Mischer 9 verbunden ist.

Bei Benutzung der Vorrichtung erfolgt Zuführung von verrottbaren Häckselmaterialien und z.B. vermahlten Mineralstoffen in die Dosiereinrichtung 8 und aus dieser mit den jeweiligen Gegebenheiten angepaßten Volumen und/oder Gewichtsanteilen Abgabe an den Mischer 9 zur Vermischung derselben. Die Anteile an gehäckselten Materialien und Mahlgut können den jeweiligen Bodenverhältnissen, z.B. dem ph-Wert angepaßt sein. Die Untersuchung der Bodenverhältnisse erfolgt vermittels einer Laboreinrichtung 16, die im Behälter 3 untergebracht ist.

Zusätzlich ist beim Ausführungsbeispiel der Vorrichtung der Fig. 4 der Absack- 13 und Wiegeeinrichtung 14 eine Trocken- und Granuliereinrichtung 19 nachgeschaltet, die in einem Behälter 20 mit der gleichen Querschnittsform und Querschnittsgröße wie die Behälter 1 bis 3 untergebracht ist. Die Verwendung von mobilen Behältern (Containern) gibt die Möglichkeit durch einfaches aneinanderstellen die Vorrichtung in kurzer Zeit an beliebigen Orten aufzurichten bzw. zum Transport abzubauen und zu transportieren.

## Patentansprüche

1. Verfahren zum Herstellen von Humusdüngemitteln und Bodenverbesserungsmitteln unter Verwendung von verrottbaren Materialien und Mineralstoffen, dadurch gekennzeichnet, daß die verrottbaren Materialien gehäckselt und die Mineralstoffe vermahlen an eine gemeinsame Dosiereinrichtung gegeben und zur Bildung eines homogenisierten Mischguts von dieser dosiert einem Mischer zugeführt werden und daß das Mischgut an einem mit einer Absack- und Wiegeeinrichtung versehenen Sammelbehälter (Silo) weitergeleitet wird.

2. Vorrichtung zur Durchführung des Verfahrens nach Anspruch 1, dadurch gekennzeichnet, daß die Vermahlung der Mineralstoffe in einer Mühle (4) erfolgt, die gemeinsam mit einem Sammelbehälter (6) in einem mobilen prismatischen Behälter (1) fest eingestellt ist, daß die Dosiereinrichtung (8), der Mischer (9) und der Sammelbehälter (12) für das Mischgut mit Absack- (13) und Wiegeeinrichtung (14) in einem weiteren mobilen prismatischen Behälter (2) angeordnet sind und daß die beiden Behälter (1,2), neben- oder übereinander stellbar sind und Fördereinrichtungen (5,7,9',11) für die Mineralstoffe, den gehäckselten Materialien und das Mischgut aufweisen.

3. Vorrichtung nach Anspruch 2, dadurch gekennzeichnet, daß die Behälter (1,2,3) mit gleichen Querschnittsformen und Querschnittsgrößen ausgebildet sind.

4. Vorrichtung nach Anspruch 2 und 3, dadurch gekennzeichnet, daß die Behälter (1,2,3) durch Frachtcontainer gebildet sind.

5. Vorrichtung nach Anspruch 2 und 3, dadurch gekennzeichnet, daß der Behälter (2) eine Absack- (13) und Wiegeeinrichtung (14) und eine Einrichtung zum Verschließen von mit Mischgut gefüllten Behältnissen, z.B. Säcke aufweist.

6. Vorrichtung nach Anspruch 2, dadurch gekennzeichnet, daß mit dem Mischer (9) über eine Rohrleitung (17) mit Ventil (18) ein Wassertank (15) in Verbindung steht.

7. Vorrichtung nach Anspruch 2 und 3, dadurch gekennzeichnet, daß der den Mischer (9) aufnehmende Behälter (2) als Träger eines aufstellbaren unabhängigen weiteren mobilen prismatischen Behälters (3) dient und daß in dem aufgestellten Behälter (3) der Sammelbehälter (12) über Öffnungen der Trennungsflächen beider Behälter (1,2) mit einer Teilhöhe frei einragt.

8. Vorrichtung nach Anspruch 2 und 7, dadurch gekennzeichnet, daß der auf dem Behälter (2) aufstellbare Behälter (3) den Sammelbehälter (12) mit einer Teilhöhe und eine Büro- und/oder Laboreinrichtung (16) und/oder sanitäre Einrichtung aufnimmt.

9. Vorrichtung nach Anspruch 2, gekennzeichnet durch eine Einrichtung zum Trocknen des vom Sammelbehälter (12) abgebbaren Mischgutes, die in einem am Behälter (2) anstellbaren mobilen prismatischen Behälter (20) mit zum Behälter gleicher Querschnittsform und Querschnittsgröße untergebracht ist.

10. Vorrichtung nach Anspruch 9, dadurch gekennzeichnet, daß der Behälter eine Einrichtung zum Trocknen und zum Granulieren (19) des vom Sammelbehälter (12) abgebbaren Mischgutes aufweist.

11. Vorrichtung nach Anspruch 2, dadurch gekennzeichnet, daß den Behältern (1,2,3) ein elektrischer Stromerzeuger mit einem durch flüssigen oder gasförmigen Brennstoff betreibbarem Antriebsmotor zugeordnet ist.

12. Vorrichtung nach Anspruch 11, dadurch gekennzeichnet, daß der Generator und der Antriebsmotor in einem an den Behältern anstellbaren Behälter (20) mit zu diesen gleicher Querschnittsform und Querschnittsgröße angeordnet sind.

13. Vorrichtung nach Anspruch 2, dadurch gekennzeichnet, daß in einem Behälter (1, 2 bzw. 3) eine elektrische Verteilerstation (21) untergebracht ist.

Fig.2

Fig. 1

Fig.3

Fig.4

5

**Europäisches
Patentamt**

# EUROPÄISCHER
# RECHERCHENBERICHT

Nummer der Anmeldung

**EP 90 11 6740**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 560 470   (ENTREPRISE MINIERE ET CHIMIQUE) <br> * Seite 2, linke Spalte, Zeile 54 - Seite 2, rechte Spalte, Zeile 58 * * Seite 4 * <br> — — — | 1 | C 05 G 1/00 <br> E 04 H 5/02 |
| A | FR-A-1 006 822   (H. COANDA) <br> * Seite 2, linke Spalte, Zeilen 20 - 26 * * Seite 3, rechte Spalte * <br> — — — | 1 | |
| Y,A | DE-A-3 417 984   (MASCHINEN- UND FÖRDERTECHNIK GMBH) <br> * Seiten 1 - 3; Figur 1 * * Seite 5, Zeilen 7 - 16 * <br> — — — | 2-13,1 | |
| A | EP-A-0 313 723   (H. STRITTMATTER) <br> * Spalte 2, Zeilen 11 - 17; Ansprüche * <br> — — — | 2,4 | |
| A | FR-A-2 570 243   (ETS RENE BRETON, SOCIETE ANONYME) <br> * Ansprüche * <br> — — — | 1,2 | |
| X,Y | EP-A-0 123 570   (S.A. "UNION TECHNIQUE ELF GENERALE DE CHAUFFE-UTEC") <br> * Seite 4, Zeile 30 - Seite 6, Zeile 2; Ansprüche * <br> — — — | 1,2-13 | |
| Y | DE-A-2 822 774   (LINDE AG) <br> * Seite 6, Zeile 21 - Seite 7, Zeile 7; Ansprüche * <br> — — — | 2-13 | |
| Y | FR-A-2 438 724   (PEC ENGINEERING S.A.) <br> * Seite P1, Zeilen 1 - 7; Ansprüche * * Seite 2, Zeile 27 - Seite 3, Zeile 28; Figuren 1, 2 * <br> — — — | 2-13 | |
| Y | FR-A-2 276 788   (MINELLA ANSTALT) <br> * Ansprüche * <br> — — — — — | 2-13 | |

**RECHERCHIERTE SACHGEBIETE (Int. Cl.5)**

C 05 F
C 05 G
E 04 H

Der vorliegende Recherchenbericht wurde für alle Patentansprüche erstellt

| Recherchenort | Abschlußdatum der Recherche | Prüfer |
|---|---|---|
| Den Haag | 17 Mai 91 | SCHUT,R.J. |